# EUROPÄISCHE PATENTANMELDUNG

(11) **EP 3 103 780 A1**
(43) Veröffentlichungstag der Anmeldung: **14.12.2016**
(21) Anmeldenummer: 15171393.0
(22) Anmeldetag: 10.06.2015
(51) Int. Cl.: C04B 35/043, C04B 35/66, F27D 1/10, F27B 3/10, F27B 3/19, F27D 1/00, F27D 3/15

(54) **FEUERFESTES KERAMISCHES ERZEUGNIS, VERWENDUNG EINES SOLCHEN ERZEUGNISSES, ELEKTROLICHTBOGENOFEN MIT ABSTICHKANAL, VERFAHREN ZUR FÜLLUNG DES ABSTICHKANALS EINES ELEKTROLICHTBOGENOFENS SOWIE VERSATZ ZUR HERSTELLUNG EINES FEUERFESTEN KERAMISCHEN ERZEUGNISSES**

(71) Anmelder: Refractory Intellectual Property GmbH & Co. KG, 1100 Wien (AT)
(72) Erfinder: Eckstein, Wilfried, 8793 Trofaiach (AT); Wallgrarn, Wilfried, 8700 Leoben (AT)
(74) Vertreter: Schweiger, Johannes

(57) **Zusammenfassung**

Die Erfindung betrifft ein feuerfestes keramisches Erzeugnis, die Verwendung eines solchen Erzeugnisses, einen Elektrolichtbogenofen mit einem Abstichkanal, ein Verfahren zur Füllung des Abstichkanals eines Elektrolichtbogenofens sowie einen Versatz zur Herstellung eines feuerfesten keramischen Erzeugnisses.

## Beschreibung

Die Erfindung betrifft ein feuerfestes keramisches Erzeugnis, die Verwendung eines solchen Erzeugnisses, einen Elektrolichtbogenofen mit einem Abstichkanal, ein Verfahren zur Füllung des Abstichkanals eines Elektrolichtbogenofens sowie einen Versatz zur Herstellung eines feuerfesten keramischen Erzeugnisses.

Der Begriff "feuerfestes keramisches Erzeugnis" im Sinne der Erfindung bezeichnet insbesondere keramische Erzeugnisse mit einer Einsatztemperatur von über 600°C und bevorzugt feuerfeste Werkstoffe gemäß DIN 51060, also Werkstoffe mit einem Kegelfallpunkt größer SK17. Die Ermittlung des Kegelfallpunktes kann insbesondere gemäß DIN EN 993-12 erfolgen. Feuerfeste keramische Erzeugnisse sind insbesondere auch in Form ungeformter feuerfester keramischer Erzeugnisse bekannt, als sogenannte "feuerfester Massen".

Mit einem "Versatz" wird bekanntermaßen eine Zusammensetzung aus einer oder mehreren Komponenten bezeichnet, durch die mittels eines keramischen Brandes ein feuerfestes keramisches Erzeugnis herstellbar ist.

Feuerfeste keramische Erzeugnisse werden insbesondere dazu verwendet, Aggregate vor einer Einwirkung durch hohe Temperaturen zu schützen, beispielsweise vor einer Einwirkung durch Metallschmelzen, heiße Gase oder Wärmestrahlung.

Ein Einsatzzweck von feuerfesten keramischen Erzeugnissen ist deren Verwendung zur Füllung des Abstichkanals eines Elektrolichtbogenofens. Bei einem Elektrolichtbogenofen handelt es sich bekanntermaßen um ein Aggregat zum Einschmelzen von Stahl und zur Aufnahme der erzeugten Stahlschmelze. Zur Aufnahme der Stahlschmelze weist ein Elektrolichtbogenofen ein feuerfest zugestelltes Bodengefäß auf. Zur Überführung der Stahlschmelze vom Bodengefäß des Elektrolichtbogenofens in die Pfanne enthält ein Elektrolichtbogenofen einen Abstichkanal, durch welchen die im Bodengefäß des Elektrolichtbogenofens befindliche Stahlschmelze in die Pfanne leitbar ist.

Ein solcher Abstichkanal des Elektrolichtbogenofens ist zunächst aus geformten feuerfesten keramischen Erzeugnissen beziehungsweise Bauteilen hergestellt. Der Bereich des Abstichkanals, der beim Durchleiten der Stahlschmelze vom Bodengefäß des Elektrolichtbogenofens in die Pfanne in Kontakt mit der Stahlschmelze tritt, also der Durchlass des Abstichkanals, ist mit einer sogenannten "Füllmasse", die auch als "Füllsandmischung" bezeichnet wird, gefüllt beziehungsweise ausgekleidet. Beim Durchleiten der Stahlschmelze durch den Abstichkanal versintert diese Füllmasse durch die Hitze der Stahlschmelze oberflächlich, also im Kontaktbereich mit der Stahlschmelze. Bei Öffnung des Abstichkanals wird die Füllmasse anschließend Teil der Stahlschlacke.

Die für die Auskleidung des Abstichkanals eines Elektrolichtbogenofens verwendbaren, feuerfesten keramischen Erzeugnisse müssen spezielle Anforderungen erfüllen. So müssen diese Erzeugnisse an ihrer Kontaktfläche mit der Stahlschmelze versintern, so dass sie aufgrund ihrer gegenüber der Stahlschmelze geringeren Dichte nicht auf der Stahlschmelze aufschwimmen. Gleichzeitig müssen diese Erzeugnisse jedoch derart konfektioniert sein, dass sie beim Öffnen des Abstichs unter den Druck der Stahlschmelze frei abrieseln. Die Erzeugnisse dürfen daher möglichst nicht über ihr gesamtes Volumen dicht gesintert sein. Um diese Bedingungen zu erfüllen, werden zur Füllung des Abstichkanals eines Elektrolichtbogenofens feuerfeste keramische Erzeugnisse verwendet, die nur oberflächlich an ihrem Kontaktbereich mit der Stahlschmelze sintern und im Übrigen nicht oder nur geringfügig versintert sind, so dass sie beim Öffnen des Abstichs unter dem Druck der Stahlschmelze frei abrieseln. Nur so können die feuerfesten keramischen Erzeugnisse für den Abstichkanal eines Elektrolichtbogenofens eine hohe Öffnungsrate aufweisen, so dass Stillstandszeiten zur manuellen Öffnung des Abstichkanals so weit wie möglich vermieden werden können. Ferner müssen die feuerfesten keramischen Erzeugnisse einen möglichst geringen Kristallwassergehalt aufweisen, so dass Wasserdampfexplosionen während des Betriebes des Elektrolichtbogenofens vermieden werden können. Des weiteren müssen die feuerfesten keramischen Erzeugnisse derart konfektioniert sein, dass die Pfannenschlacke durch die feuerfesten keramischen Erzeugnisse in möglichst geringem Umfang verunreinigt wird, insbesondere in möglichst geringem Umfang durch eine etwaige Aufnahme von SiO₂ aus dem feuerfesten keramischen Erzeugnis. Schließlich ist unter wirtschaftlichen Gesichtspunkten regelmäßig gewünscht, dass die feuerfesten keramischen Erzeugnisse für die Füllung eines Abstichkanals eines Elektrolichtbogenofens aus möglichst kostengünstigen Rohstoffen herstellbar sind.

Die aus dem Stand der Technik bekannten feuerfesten keramischen Erzeugnisse zur Füllung des Abstichkanals von Elektrolichtbogenöfen basieren regelmäßig auf Olivin. Feuerfeste keramische Erzeugnisse auf Basis Olivin zur Füllung des Abstichkanals von Elektrolichtbogenöfen haben sich zwar grundsätzlich bewährt. Allerdings hat es sich in der Praxis häufig als schwierig erwiesen, die Zusammensetzung eines auf Olivin basierenden feuerfesten keramischen Erzeugnisses derart zu konfektionieren, dass dieses die vorstehenden Anforderungen an Erzeugnisse für die Füllung des Abstichkanals in Elektrolichtbogenöfen erfüllt.

Vor diesem Hintergrund liegt der Erfindung die Aufgabe zugrunde, ein feuerfestes keramisches Erzeugnis für die Füllung von Abstichkanälen in Elektrolichtbogenöfen zur Verfügung zu stellen, welches die vorbezeichneten Anforderungen erfüllt. Insbesondere soll das Erzeugnis zwar an seiner Kontaktfläche mit der und durch die Stahlschmelze versinterbar sein, nicht jedoch über sein gesamtes Volumen durch die Stahlschmelze dicht gesintert werden. Insbesondere soll das Erzeugnis beim Öffnen des Abstichs unter dem Druck der Stahlschmelze frei abrieseln können. Ferner soll das Erzeugnis einen möglichst geringen Kristallwassergehalt aufweisen. Ferner soll das Erzeugnis derart konfektioniert sein, dass die Pfannenschlacke durch das Erzeugnis in möglichst geringem Umfang verunreinigt wird, insbesondere in möglichst geringem Umfang durch eine etwaige Aufnahme von SiO₂ aus dem feuerfesten keramischen Erzeugnis. Schließlich soll das Erzeugnis aus möglichst kostengünstigen Rohstoffen herstellbar sein.

Eine weitere Aufgabe der Erfindung besteht darin, einen Elektrolichtbogenofen mit einem Abstichkanal zur Verfügung zu stellen, bei dem der Abstichkanal mit einem solchen feuerfesten keramischen Erzeugnis gefüllt ist.

Eine weitere Aufgabe der Erfindung besteht darin, ein Verfahren zur Füllung des Abstichkanals eines Elektrolichtbogenofens mit einem solchen Erzeugnis zur Verfügung zu stellen.

Schließlich besteht eine Aufgabe der Erfindung darin, einen Versatz zur Herstellung eines solchen feuerfesten keramischen Erzeugnisses zur Verfügung zu stellen.

Zur Lösung der Aufgabe wird erfindungsgemäß zur Verfügung gestellt ein feuerfestes keramisches Erzeugnis, welches die folgenden Oxide in den folgenden Massenanteilen umfasst:
MgO: 45 bis 80 Masse-%;
SiO₂: 10 bis 35 Masse-%;
Fe₂O₃: 2 bis 10 Masse-%;
CaO: 1 bis 20 Masse-%.

Erfindungsgemäß hat sich herausgestellt, dass durch ein feuerfestes keramisches Erzeugnis, welches die vorbezeichneten Oxide in den vorbezeichneten Massenanteilen umfasst, ein Erzeugnis zur Verfügung gestellt werden kann, welches die vorbezeichneten Anforderungen, welche an Erzeugnisse zur Füllung des Abstichkanals von Elektrolichtbogenöfen gestellt werden, erfüllen kann.

Insofern hat sich erfindungsgemäß herausgestellt, dass ein feuerfestes keramisches Erzeugnis mit einer solchen Oxidzusammensetzung zwar oberflächlich durch die Schmelze versintert, und hierdurch eine dichte Fläche gegenüber einer Stahlschmelze bildet; gleichzeitig versintert das Erzeugnis jedoch nicht dicht über sein gesamtes Volumen, so dass das Erzeugnis beim Öffnen des Abstichs unter dem Druck der Stahlschmelze noch frei abrieseln kann.

Ferner hat sich erfindungsgemäß herausgestellt, dass das erfindungsgemäße Erzeugnis eine hohe Öffnungsrate aufweist, so dass Stillstandszeiten weitgehend vermieden werden können. Ferner hat sich erfindungsgemäß herausgestellt, dass Pfannenschlacke durch das erfindungsgemäße, feuerfeste keramische Erzeugnis nur im geringen Umfang durch SiO₂ verunreinigt wird. Schließlich hat sich herausgestellt, dass ein feuerfestes keramisches Erzeugnis mit der erfindungsgemäßen Oxidzusammensetzung durch verhältnismäßig günstige Rohstoffe herstellbar ist.

Das erfindungsgemäße Erzeugnis kann insbesondere in Form eines ungeformten feuerfesten keramischen Erzeugnisses, also in Form einer feuerfesten Masse vorliegen.

Das erfindungsgemäße Erzeugnis kann neben den vorbezeichneten Oxiden ferner einen Massenanteil an Al₂O₃ von 0,1 bis 5 Masse-% aufweisen.

Die hierin in Hinblick auf das erfindungsgemäße, feuerfeste keramische Erzeugnis gemachten Angaben in Masse-% sind jeweils bezogen auf die Gesamtmasse des erfindungsgemäßen feuerfesten keramischen Erzeugnisses, so weit im Einzelfall nichts anderes angegeben ist.

Erfindungsgemäß hat sich herausgestellt, dass die zuvor genannten, vorteilhaften Eigenschaften des erfindungsgemäßen Erzeugnisses negativ beeinflusst werden können, wenn das Erzeugnis neben MgO, SiO₂, CaO, Fe₂O₃ und Al₂O₃ weitere Bestandteile beziehungsweise Oxide umfasst. Nach einer Ausführungsform kann daher vorgesehen sein, dass das Erzeugnis neben MgO, SiO₂, CaO, Fe₂O₃ und Al₂O₃ weitere Bestandteile in einem Massenanteil unter 10 Masse-% aufweist, also beispielsweise auch in einem Massenanteil unter 9, 8, 7, 6, 5, 4, 3, 2 oder 1 Masse-%.

MgO kann das erfindungsgemäße feuerfeste keramische Erzeugnis in einem Massenanteil im Bereich von 45 bis 80 Masse-% umfassen, also beispielsweise auch in einem Massenanteil von wenigstens 45, 50, 55, 60, 61, 62, 63, 64, 65 oder 66 Masse-% und beispielsweise auch in einem Anteil von höchstens 80, 75, 74, 73, 72, 71, 70, 69 oder 68 Masse-%.

SiO₂ kann das erfindungsgemäße feuerfeste keramische Erzeugnis in einem Massenanteil im Bereich von 10 bis 35 Masse-% umfassen, also beispielsweise auch in einem Massenanteil von wenigstens 10, 12, 14, 16, 17, 18, 19 oder 20 Masse-% und beispielsweise auch in einem Anteil von höchstens 35, 30, 28, 25, 24, 23 oder 22 Masse-%.

CaO kann das erfindungsgemäße feuerfeste keramische Erzeugnis in einem Massenanteil im Bereich von 1 bis 20 Masse-% umfassen, also beispielsweise auch in einem Massenanteil von wenigstens 1 oder 1,5 oder 2 oder 2,5 oder 3 oder 3,5 oder 4 Masse-% und beispielsweise auch in einem Anteil von höchstens 20, 15, 13, 10, 9, 8, 7, 6 oder 5 Masse-%.

Fe₂O₃ kann das erfindungsgemäße feuerfeste keramische Erzeugnis in einem Massenanteil im Bereich von 2 bis 10 Masse-% umfassen, also beispielsweise auch in einem Massenanteil von wenigstens 2 oder 3 oder 4 oder 5 oder 5,5 oder 6 oder 6,5 Masse-% und beispielsweise auch in einem Anteil von höchstens 10 oder 9,5 oder 9 oder 8,5 oder 8 oder 7,5 Masse-%.

Al₂O₃ kann das erfindungsgemäße feuerfeste keramische Erzeugnis in einem Massenanteil im Bereich von 0,1 bis 5 Masse-% umfassen, also beispielsweise auch in einem Massenanteil von wenigstens 0,1 oder 0,2 oder 0,3 oder 0,4 Masse-% und beispielsweise auch in einem Anteil von höchstens 5 oder 4 oder 3 oder 2 oder 1 oder 0,9 oder 0,8 oder 0,7 oder 0,6 Masse-%.

Kristallwassergehalt kann das erfindungsgemäße feuerfeste keramische Erzeugnis in einem Massenanteil unter 8 Masse-% umfassen, also beispielsweise auch in einem Massenanteil unter 7, 6, 5 oder 4 Masse-%.

Überraschend ist die besonders gute Eigenschaft des erfindungsgemäßen feuerfesten keramischen Erzeugnisses, bei Kontakt mit der Stahlschmelze oberflächlich gut zu versintern, jedoch über das Volumen kaum oder nur geringfügig zu versintern, so dass das Erzeugnis beim Öffnen des Abstichs frei abzurieseln vermag. Die Erfinder vermuten, dass dies an der spezifischen Oxidzusammensetzung des Erzeugnisses liegt, insbesondere an den erfindungsgemäßen Anteilen an SiO₂, Fe₂O₃ und MgO. Erfindungsgemäß hat sich herausgestellt, dass diese vorteilhaften Eigenschaften des Erzeugnisses insbesondere dann vorliegen können, wenn die Anteile an SiO₂, Fe₂O₃ und MgO im Erzeugnis in spezifischen Massenanteilen zueinander vorliegen.

So kann nach einer Ausführungsform der Erfindung vorgesehen sein, dass das Verhältnis der Massenanteile von SiO₂ zu Fe₂O₃ im Bereich von 1,5 bis 8 liegt, also beispielsweise auch bei einem Verhältnis von wenigstens 1,5 oder 2 oder 2,5 und beispielsweise auch bei einem Verhältnis von höchstens 8, 7, 6, 5 oder 4.

Ferner kann vor diesem Hintergrund nach einer Ausführungsform vorgesehen sein, dass das Verhältnis des Massenanteils von MgO zur Gesamtmasse aus SiO₂ und Fe₂O₃ im Bereich von 1,2 bis 5,7 liegt, also beispielsweise auch bei einem Verhältnis von wenigstens 1,2 oder 1,4 oder 1,6 oder 1,8 oder 2,0 oder 2,2 und beispielsweise auch bei einem Verhältnis von höchstens 5,7 oder 5,5 oder 5 oder 4,5 oder 4 oder 3,5 oder 3 oder 2,8 oder 2,6.

Gegenstand der Erfindung ist ferner die Verwendung des erfindungsgemäßen Erzeugnisses zum Füllen des Abstichkanals eines Elektrolichtbogenofens. Unter dem "Füllen" des Abstichkanals wird erfindungsgemäß das Befüllen beziehungsweise das Auskleiden des Abstichkanals verstanden.

Gegenstand der Erfindung ist ferner ein Elektrolichtbogenofen mit einem Abstichkanal, der mit einem erfindungsgemäßen Erzeugnis gefüllt ist. Gegenstand der Erfindung ist ferner ein Verfahren zum Füllen des Abstichkanals eines Elektrolichtbogenofens mit folgenden Schritten:
- Zur Verfügungstellung eines erfindungsgemäßen Erzeugnisses;
- Füllen des Abstichkanals eines Elektrolichtbogenofens mit dem erfindungsgemäßen Erzeugnis.

Soweit das erfindungsgemäße Erzeugnis in Form einer feuerfesten Masse vorliegt, kann der Abstichkanal mit einer solch feuerfesten Masse gefüllt werden.

Gegenstand der Erfindung ist ferner ein Versatz zur Herstellung eines feuerfesten keramischen Erzeugnisses, insbesondere eines erfindungsgemäßen feuerfesten keramischen Erzeugnisses, der die folgenden Komponenten in den folgenden Massenanteilen umfasst:
- Sintermagnesia: 30 bis 80 Masse-%;
- Olivin und/oder Serpentin: 20 bis 70 Masse-%.

Die hierin gemachten, auf den Versatz bezogenen Angaben in Masse-% sind jeweils bezogen auf die Gesamtmasse des erfindungsgemäßen Versatzes, soweit im Einzelfall nicht anders angegeben.

Erfindungsgemäß hat sich herausgestellt, dass ein feuerfestes keramisches Erzeugnis zur Füllung des Abstichkanals eines Elektrolichtbogenofens, insbesondere in Form eines erfindungsgemäßen feuerfesten keramischen Erzeugnisses, sehr vorteilhaft auf Basis des Rohstoffs Sintermagnesia und wenigstens eines der Rohstoffe Olivin oder Serpentin herstellbar ist. Auf Basis dieser Rohstoffe kann ein feuerfestes keramisches Erzeugnis, insbesondere ein erfindungsgemäßes feuerfestes keramisches Erzeugnis mit einer erfindungsgemäßen Oxidzusammensetzung hergestellt werden. Besonders vorteilhaft an der Verwendung der Rohstoffe Olivin und Serpentin ist auch, dass diese Rohstoffe verhältnismäßig kostengünstig zur Verfügung gestellt werden können, so dass ein erfindungsgemäßes feuerfestes keramisches Erzeugnis auf Basis eines erfindungsgemäßen Versatzes besonders wirtschaftlich herstellbar ist.

Dabei kann das erfindungsgemäße keramische Erzeugnis auf Basis des erfindungsgemäßen Versatzes in Abhängigkeit der gegebenen Zusammensetzung der Komponenten beziehungsweise Rohstoffe, die diese jeweils aufweisen, hergestellt werden.

Um die Anteile an SiO₂, Fe₂O₃,CaO und gegebenenfalls auch Al₂O₃ in einem durch den erfindungsgemäßen Versatz hergestellten Erzeugnis zumindest teilweise oder auch weitgehend durch die Sintermagnesia des Versatzes zur Verfügung zu stellen, kann als Sintermagnesia in dem erfindungsgemäßen Versatz bevorzugt eine eisenreiche Sintermagnesia vorliegen. Beispielsweise kann eine solch eisenreiche Sintermagnesia die folgenden Oxide in den folgenden Massenanteilen umfassen, jeweils bezogen auf die Gesamtmasse der verwendeten Sintermagnesia, wobei die einzelnen Oxide jeweils einzeln oder in Kombination in den genannten Anteilen in der Sintermagnesia vorliegen können:

| | |
|---|---|
| MgO: | 80 bis 95 Masse-%, also beispielsweise auch wenigstens 80, 81, 82 oder 83 Masse-% und beispielsweise auch höchstens 95, 92, 90, 80, 88, 86, 85 oder 84 Masse-%; |
| Fe₂O₃: | 1 bis 8 Masse-%, also beispielsweise auch wenigstens 1, 2, 3, 4 oder 5 Masse-% und beispielsweise auch höchstens 8, 7 oder 6 Masse-%; |
| CaO: | 1 bis 20 Masse-%, also beispielsweise auch wenigstens 1, 2, 3, 4, 5, 6, 7, 8 oder 9 Masse-% und beispielsweise auch höchstens 20, 18, 15, 14, 13, 12 oder 11 Masse-%; |
| SiO₂: | 0,5 bis 4 Masse-%, also beispielsweise auch wenigstens 0,5 oder 0,6 oder 0,7 oder 0,8 oder 0,9 Masse-% und beispielsweise auch höchstens 4, 3, 2 oder 1,5 Masse-%; |
| Al₂O₃: | 0,1 bis 1 Masse-%, also beispielsweise auch wenigstens 0,1 oder 0,2 oder 0,3 oder 0,4 Masse-% und beispielsweise auch höchstens 1 oder 0,9 oder 0,8 oder 0,7 oder 0,6 Masse-%. |

Bei Serpentin handelt es sich bekanntermaßen um ein Silikatmineral mit der allgemeinen chemischen Zusammensetzung (Mg,Fe,Ni)6Si₄Olo(OH)₈, wobei Mg, Fe und Ni in beliebiger Mischung vorliegen können. Bevorzugt wird in dem erfindungsgemäßen Versatz ein Serpentin verwendet, der nur geringe oder keine Anteile an Ni aufweist. Der Kristallwassergehalt kann beispielweise im Bereich von 10 bis 15 Masse-% liegen, bezogen auf die Gesamtmasse des Serpentins.

Bei Olivin handelt es sich ebenfalls bekanntermaßen um ein Silikatmineral mit der allgemeinen chemischen Zusammensetzung (Mg,Fe,Ni,Mn,Ca,Pb,Co)₂SiO₄, wobei die Elemente Mg, Fe, Ni, Mn, Ca, Pb und Co wiederum in beliebigen Anteilen vorliegen können. Bevorzugt wird in dem erfindungsgemäßen Versatz ein Olivin verwendet, der nur geringe oder keine Anteile an einem oder mehreren der Elemente Ni, Mn, Pb und Co aufweist.

Der erfindungsgemäße Versatz kann neben den Rohstoffen Sintermagnesia, Olivin und Serpentin ferner einen oder mehrere der folgenden weiteren Rohstoffe, jeweils in den folgenden Massenanteilen, jeweils bezogen auf die Gesamtmasse des Versatzes, aufweisen, wobei diese Rohstoffe jeweils einzeln oder in Kombination im Versatz vorliegen können:
Rohmagnesit: 1 bis 50 Masse-%;
Kalkstein: 1 bis 50 Masse-%;
Quarz: 1 bis 25 Masse-%.

Da die Eigenschaften eines aus dem erfindungsgemäßen Versatz hergestellten Erzeugnisses, insbesondere soweit dieses zum Füllen des Abstichkanals von Elektrolichtbogenöfen verwendet wird, verschlechtert werden können, kann erfindungsgemäß vorgesehen sein, dass der erfindungsgemäße Versatz einen Massenanteil an weiteren Bestandteilen, die neben Sintermagnesia, Serpentin, Olivin, Rohmagnesit, Kalkstein und Quarz im erfindungsgemäßen Versatz vorliegen, unter 10 Masse-% aufweist, also beispielsweise auch unter 9, 8, 7, 6, 5, 4, 3, 2 oder 1 Masse-%, jeweils bezogen auf die Gesamtmasse des erfindungsgemäßen Versatzes.

In dem erfindungsgemäßen Versatz können die erfindungsgemäß vorgesehenen Rohstoffe beispielsweise in den folgenden Anteilen, jeweils bezogen auf die Gesamtmasse des Versatzes, jeweils einzeln oder in Kombination vorliegen:

| | |
|---|---|
| Sintermagnesia: | 30 bis 80 Masse-%, also beispielsweise auch wenigsten 30, 35, 40, 45, 46, 47, 48 oder 49 Masse-% und beispielsweise auch höchstens 80, 75, 70, 65, 60, 55, 54, 53, 52 oder 51 Masse-%; |
| Gesamtmasse aus | Olivin und Serpentin: 20 bis 70 Masse-%, also beispielsweise auch wenigsten 20, 25, 30, 35, 40, 45, 46, 47, 48 oder 49 Masse-% und beispielsweise auch höchstens 70, 65, 60, 55, 54, 53, 52 oder 51 Masse-%; |
| Olivin: | 20 bis 70 Masse-%, also beispielsweise auch wenigsten 20, 25, 30, 35, 40, 45, 46, 47, 48 oder 49 Masse-% und beispielsweise auch höchstens 70, 65, 60, 55, 54, 53, 52 oder 51 Masse-%; |
| Serpentin: | 20 bis 70 Masse-%, also beispielsweise auch wenigsten 20, 25, 30, 35, 40, 45, 46, 47, 48 oder 49 Masse-% und beispielsweise auch höchstens 70, 65, 60, 55, 54, 53, 52 oder 51 Masse-%; |
| Rohmagnesit: | 5 bis 50 Masse-%, also beispielsweise auch wenigsten 5, 10, 15, 16, 17, 18 oder 19 Masse-% und beispielsweise auch höchstens 50, 45, 40, 35, 30, 25, 24, 23, 22 oder 21 Masse-%; |
| Kalkstein: | 5 bis 50 Masse-%, also beispielsweise auch wenigsten 5, 10, 15, 16, 17, 18 oder 19 Masse-% und beispielsweise auch höchstens 50, 45, 40, 35, 30, 25, 24, 23, 22 oder 21 Masse-%; |
| Quarz: | 2 bis 25 Masse-%, also beispielsweise auch wenigsten 2, 3 oder 4 Masse-% und beispielsweise auch höchstens 25, 20, 15, 10, 9, 8, 7 oder 6 Masse-%. |

Bevorzugt kann vorgesehen sein, dass die Rohstoffe des erfindungsgemäßen Versatzes in einer verhältnismäßig groben Körnung vorliegen. Beispielsweise kann vorgesehen sein, dass der Versatz zu wenigstens 90 Masse-% oder beispielsweise auch zu 100 Masse-% mit einer Korngröße im Bereich von 1 bis 8 mm vorliegt, also beispielsweise auch zu wenigstens 90 Masse-% oder beispielsweise auch zu 100 Masse-% in einer Korngröße von wenigstens 1 oder 2 mm und beispielsweise auch in einer Korngröße von höchstens 8, 7, 6 oder 5 mm.

Erfindungsgemäß hat sich herausgestellt, dass der Versatz bei einer solchen Korngröße zwar oberflächlich gut versintert, gleichzeitig aber nicht über das Volumen des aus dem Versatz gebildeten, feuerfesten keramischen Erzeugnisse so dicht versintert, dass das Erzeugnis beim Öffnen des Abstichkanals nicht mehr frei abrieseln kann.

Die Korngröße ist bestimmt gemäß DIN 22019-1:1985-03..

Weitere Merkmale der Erfindung ergeben sich aus den Unteransprüchen sowie der nachfolgenden Beschreibung von Ausführungsbeispielen der Erfindung.

Sämtliche Merkmale der Erfindung können, einzeln oder in Kombination, beliebig miteinander kombiniert sein.

Ausführungsbeispiele der Erfindung werden nachfolgend beispielhaft erläutert.

Bei der im Rahmen der Ausführungsbeispiele verwendeten Sintermagnesia handelt es sich um eine eisenreiche Sintermagnesia, die in etwa die folgende Oxidzusammensetzung aufwies: MgO 83,1 Masse-%, Fe₂O₃ 5,4 Masse-%; CaO 10,0 Masse-%, SiO₂ 1,0 Masse-% und Al₂O₃ 0,5 Masse-%, jeweils bezogen auf die Gesamtmasse der Sintermagnesia.

Der verwendete Serpentin entsprach im wesentlichen der Formel (Mg,Fe)₆Si₄O₁₀(OH)₈ und der verwendete Olivin im wesentlichen der Formel (Mg,Fe)₂SiO₄. Der verwendete Serpentin wies einen Anteil an SiO₂ von etwa 41,0 Masse-%, einen Anteil an Fe₂O₃ von etwa 8,5 Masse-% und einen Anteil an MgO von etwa 50,5 Masse-% auf; der kristallwasserbedingte Glühverlust betrug etwa 12,5 Masse-%. Der verwendete Olivin wies einen Anteil an SiO₂ von etwa 42,0 Masse-%, einen Anteil an Fe₂O₃ von etwa 8,0 Masse-% und einen Anteil an MgO von etwa 50,0 Masse-% auf; der kristallwasserbedingte Glühverlust betrug etwa 1,2 Masse-%.

Im Übrigen wurden für die Ausführungsbeispiele die Rohstoffe eisenreicher Rohmagnesit, Kalkstein und Quarz verwendet.

In den nachfolgenden Ausführungsbeispielen 1 bis 12 sind Ausführungsbeispiele des erfindungsgemäßen Versatzes angegeben, der die angegebenen Rohstoffe jeweils in den angegebenen Massenanteilen umfasst, jeweils bezogen auf die Gesamtmasse des Versatzes des betreffenden Ausführungsbeispieles.

| Beispiel 1: | |
|---|---|
| Sintermagnesia: | 50 Masse-%; |
| Serpentin: | 50 Masse-%. |

| Beispiel 2: | |
|---|---|
| Sintermagnesia: | 50 Masse-%; |
| Olivin: | 50 Masse-%. |

| Beispiel 3: | |
|---|---|
| Sintermagnesia: | 40 Masse-%; |
| Serpentin: | 30 Masse-%; |
| Olivin: | 30 Masse-%. |

| Beispiel 4: | |
|---|---|
| Sintermagnesia: | 35 Masse-%; |
| Serpentin: | 60 Masse-%; |
| Quarz: | 5 Masse-%. |

| Beispiel 5: | |
|---|---|
| Sintermagnesia: | 35 Masse-%; |
| Olivin: | 60 Masse-%; |
| Quarz: | 5 Masse-%. |

| Beispiel 6: | |
|---|---|
| Sintermagnesia: | 35 Masse-%; |
| Serpentin: | 30 Masse-%; |
| Olivin: | 30 Masse-%; |
| Quarz: | 5 Masse-%. |

| Beispiel 7: | |
|---|---|
| Sintermagnesia: | 50 Masse-%; |
| Serpentin: | 30 Masse-%; |
| Rohmagnesit: | 20 Masse-%. |

| Beispiel 8: | |
|---|---|
| Sintermagnesia: | 50 Masse-%; |
| Olivin: | 30 Masse-%; |
| Rohmagnesit: | 20 Masse-%. |

| Beispiel 9: | |
|---|---|
| Sintermagnesia: | 50 Masse-%; |
| Serpentin: | 15 Masse-%; |
| Olivin: | 15 Masse-%; |
| Rohmagnesit: | 20 Masse-%. |

| Beispiel 10: | |
|---|---|
| Sintermagnesia: | 40 Masse-%; |
| Serpentin: | 20 Masse-%; |
| Kalkstein: | 40 Masse-%. |

| Beispiel 11: | |
|---|---|
| Sintermagnesia: | 40 Masse-%; |
| Olivin: | 20 Masse-%; |
| Kalkstein: | 40 Masse-%. |

| Beispiel 12: | |
|---|---|
| Sintermagnesia: | 40 Masse-%; |
| Serpentin: | 10 Masse-%; |
| Olivin: | 10 Masse-%; |
| Kalkstein: | 40 Masse-%. |

In sämtlichen Versätzen lagen die Rohstoffe zu 100 % in einer Korngröße im Bereich von 1 bis 8 mm vor.

Zur Homogenisierung der Versätze wurden deren jeweilige Rohstoffe in einem Mischer miteinander gemischt, beispielsweise in einem Freifall-, Zwangs-, Intensiv- oder einem Trommelmischer.

Der gemischte Versatz wurde in dieser Form als feuerfeste Masse zur Füllung eines Abstichkanals eines Elektrolichtbogenofens verwendet.

Bei sämtlichen der vorgenannten Ausführungsbeispielen 1 bis 12 lagen die Oxidanteile der erhaltenen feuerfesten Masse im Bereich des erfindungsgemäßen feuerfesten keramischen Erzeugnisses.

Beispielsweise wies das gemäß dem Ausführungsbeispiel 1 erhaltene feuerfeste keramische Erzeugnis die folgende Oxidzusammensetzung auf:

| | |
|---|---|
| MgO: | 66 Masse-%; |
| SiO₂: | 21 Masse-%; |
| Fe₂O₃: | 7 Masse-%; |
| CaO: | 4,5 Masse-%; |
| Al₂O₃: | 0,5 Masse-%; |
| Weitere Oxide: | 1 Masse-%. |

Der Glühverlust betrug etwa 6,2 Masse-%.

Demnach lag das Verhältnis der Massenanteile von SiO₂ zu Fe₂O₃ im Erzeugnis bei 3. Ferner lag das Verhältnis des Massenanteils von MgO zur Gesamtmasse aus SiO₂ und Fe₂O₃ im Erzeugnis bei 2,36.

## Patentansprüche

1. Feuerfestes keramisches Erzeugnis, welches die folgenden Oxide in den folgenden Massenanteilen umfasst:
| | |
|---|---|
| MgO: | 45 bis 80 Masse-%; |
| SiO₂: | 10 bis 35 Masse-%; |
| Fe₂O₃: | 2 bis 10 Masse-%; |
| CaO: | 1 bis 20 Masse-%. |

2. Erzeugnis nach Anspruch 1 in Form eines ungeformten feuerfesten keramischen Erzeugnisses.

3. Erzeugnis nach wenigstens einem der vorhergehenden Ansprüche mit einem Massenanteil an Al₂O₃ von 0,1 bis 5 Masse-%.

4. Erzeugnis nach Anspruch 3 mit einem Massenanteil an weiteren Bestandteilen neben MgO, SiO₂, CaO, Fe₂O₃ und Al₂O₃ unter 10 Masse-%.

5. Erzeugnis nach wenigstens einem der vorhergehenden Ansprüche mit einem Verhältnis der Massenanteile von SiO₂ zu Fe₂O₃ im Bereich von 1,5 bis 8.

6. Erzeugnis nach wenigstens einem der vorhergehenden Ansprüche mit einem Verhältnis des Massenanteils von MgO zur Gesamtmasse aus SiO₂ und Fe₂O₃ im Bereich von 1,2 bis 5,7.

7. Verwendung eines Erzeugnisses nach wenigstens einem der vorhergehenden Ansprüche zum Füllen des Abstichkanals eines Elektrolichtbogenofens.

8. Elektrolichtbogenofen mit einem Abstichkanal, der mit einem Erzeugnis nach wenigstens einem der Ansprüche 1 bis 6 gefüllt ist.

9. Verfahren zur Füllung des Abstichkanals eines Elektrolichtbogenofens mit folgenden Schritten:
Zur Verfügungstellung eines Erzeugnisses nach wenigstens einem der Ansprüche 1 bis 6;
Füllen des Abstichkanals eines Elektrolichtbogenofens mit dem Erzeugnis.

10. Versatz zur Herstellung eines feuerfesten keramischen Erzeugnisses, der die folgenden Komponenten in den folgenden Massenanteilen umfasst:
Sintermagnesia: 30 bis 80 Masse-%;
wenigstens eine der Komponenten Olivin oder Serpentin: 20 bis 70 Masse-%.

11. Versatz nach Anspruch 10 mit einem Massenanteil an Rohmagnesit von 5 bis 50 Masse-%.

12. Versatz nach wenigstens einem der Ansprüche 10 bis 11 mit einem Massenanteil an Kalkstein von 5 bis 50 Masse-%.

13. Versatz nach wenigstens einem der Ansprüche 10 bis 12 mit einem Massenanteil an Quarz von 2 bis 25 Masse-%.

14. Versatz nach wenigstens einem der Ansprüche 10 bis 13 mit einem Massenanteil an weiteren Bestandteilen neben Sintermagnesia, Serpentin, Olivin, Rohmagnesit, Kalkstein und Quarz unter 10 Masse-%.

## Geänderte Patentansprüche

### Geänderte Patentansprüche gemäss Regel 137(2) EPÜ.

**1.** Feuerfestes keramisches Erzeugnis, welches die folgenden Oxide in den folgenden Massenanteilen umfasst:
| | |
|---|---|
| MgO: | 45 bis 80 Masse-%; |
| SiO₂: | 10 bis 35 Masse-%; |
| Fe₂O₃: | 2 bis 10 Masse-%; |
| CaO: | 3 bis 20 Masse-%. |

**10.** Versatz zur Herstellung eines feuerfesten keramischen Erzeugnisses nach wenigstens einem der vorhergehenden Ansprüche, der die folgenden Komponenten in den folgenden Massenanteilen umfasst:
Sintermagnesia: 30 bis 80 Masse-%;
wenigstens eine der Komponenten Olivin oder Serpentin: 20 bis 70 Masse-%.
